# EUROPÄISCHE PATENTSCHRIFT

(11) **EP 3 106 770 B1**
(45) Veröffentlichungstag und Bekanntmachung des Hinweises auf die Patenterteilung: **18.09.2019**
(21) Anmeldenummer: 16174687.0
(22) Anmeldetag: 16.06.2016
(51) Int. Cl.: F24F 11/74, F24F 13/02, F24F 11/75, F24F 13/14

(54) **VOLUMENSTROMREGLER**
VOLUME FLOW REGULATOR
RÉGULATEUR DE DÉBIT

(30) Priorität: 17.06.2015 DE 102015109653
(43) Veröffentlichungstag der Anmeldung: 21.12.2016
(73) Patentinhaber: Schako Klima Luft Ferdinand Schad KG, 78600 Kolbingen (DE)
(72) Erfinder: RADOVIC, Petar, 78432 Tuttlingen (DE); BANTLE, Siegbert, 78603 Renquishausen (DE); LEIBINGER, Steffen, 78570 Mühlheim (DE)
(74) Vertreter: Patentanwälte und Rechtsanwalt Weiß, Arat & Partner mbB

(56) Entgegenhaltungen:
- EP-A2- 1 134 507
- DE-A1-102013 201 025
- FR-A3- 2 644 243
- US-A- 4 009 826

## Beschreibung

Die Erfindung betrifft einen Volumenstromregler nach dem Oberbegriff des Anspruchs 1.

### STAND DER TECHNIK

Es gibt eine Vielzahl an unterschiedlichen Volumenstromreglern in Verbindung mit Venturidüsen für die unterschiedlichsten Einsatzgebiete. Ebenso vielfältig sind Materialauswahl und Materialkombination. Den meisten Volumenstromreglern ist jedoch gemein, dass sie sehr differenziert, das heisst aus vielen Einzelteilen zusammengesetzt werden, wie beispielsweise aus der Offenbarung FR 2644243 A ersichtlich wird wird, welche die Merkmale des Oberbegriffs von Anspruch 1 zeigt.

In diesem Zusammenhang wird ausserdem auf die US 4,009,826 hingewiesen, welche ebenfalls einen Volumenstromregler mit einem Venturi-Bauteil aufweist.

Ausserdem wird auf die EP 1 134 507 A2 hingewiesen, welche ebenfalls einen Volumenstromregler aufzeigt, in welcher eine Klappe zur Regelung des Volumenstroms angeordnet ist.

Weiter wird auf die DE 10 2013 201 025 A1 hingewiesen, bei der in einem Volumenstromregler eine Drosselklappe angebracht ist, wobei diese Drosselklappe einen schwenkbar gelagerten ersten Abschnitt und einen in Bezug auf die Kanalwandung unbeweglich fixierbaren zweiten Abschnitt aufweist.

Das Vorhandensein vieler Einzelbauteile birgt die Gefahr einer hohen Störungsanfälligkeit bei gleichzeitig hohen Material- und Produktionskosten. Im Laufe längerer Betriebszeiten und dem ständigen Luftstrom können sich Einzelbauteile lösen und führten in einigen Fällen zu störenden Klapper- und Rasselgeräuschen in der Lüftungsanlage, bis hin zum Ausfall der Funktionsfähigkeit.

Insbesondere bei Volumenstromreglern die aus Metall gefertigt werden ist der Fertigungsaufwand bisher durchweg, durch mehrere aufeinander folgende Herstellungsschritte und viele einzelne Bauteile, sehr aufwendig und damit teuer. In diesem Zusammenhang wird beispielsweise auf die Offenbarungen der EP 1318359 A2, US 4651572, US 3273390, DE 1068905 A und DE 602545 A hingewiesen. Einzelne Bauteile der Volumenstromregler aus Metall müssen bisher nach den gängigen Herstellungsverfahren tiefgezogen, geschmiedet, geschweisst oder gesintert werden, was meist sehr aufwändig und teuer ist.

Volumenstromregler aus Spritzkunststoffen, wie sie beispielsweise in DE 19537063 A1 offenbart sind, sind zwar auf der Ebene der reinen Materialkosten etwas kostengünstiger, weisen jedoch aufgrund der teuren Werkzeuge eine schlechtere Kostenbilanz auf. Zudem müssen alle Kunststoffguss- und Kunststoffspritzteile an ihren Kanten und Schweissnähten in Handarbeit mühsam nachbearbeitet werden.

### AUFGABE DER ERFINDUNG

Aufgabe der Erfindung ist es einen Volumenstromregler zur Verfügung zu stellen, welcher einfach, insbesondere produktionsgünstig in der Herstellung ist und die bekannten Vorteile einer Venturidüse hat, ohne qualitative Nachteile in der Funktionsweise in Kauf nehmen zu müssen. Dabei sollen möglich wenige Bauteile verwendet werden, da diese mit der Zeit das Risiko für etwaige Störungen erhöhen.

### LÖSUNG DER AUFGABE

Zur Lösung der Aufgabe führen die Merkmale nach dem Anspruch 1. Bevorzugte Ausführungsformen sind in den Unteransprüchen definiert.

Die Erfindung betrifft einen Volumenstromregler aus Metall, vorzugsweise aus Stahlblech für Klima- und Belüftungsanlagen, insbesondere für Wohn- und Laborgebäuden. Die Messung des statischen Druckes vor der Düse und im Düsenhals ergibt eine Druckdifferenz durch welche der Volumenstrom berechnet wird (siehe Bernoulli-Gleichung). Über die Messung von Druckdifferenzen zwischen der schmalsten und weitesten Stelle einer Düse (Positiv- und Negativ- Druckmessung) wird der Volumenstrom in einer betreffenden Klima- und Belüftungsanlage gemessen. Dabei erfolgt die Verengung und anschliessende Erweiterung des Querschnittes der Düse über einen Konfusor im Einlauf und einen Diffusor im Auslauf derart, dass keine Grenzschichtablösung des Luftstroms auftritt, die die Messungen verfälschen würden. Auf Grundlage der Messungen wird über eine Steuerung und einen Stellantrieb eine nachgeordnete Stellklappe so positioniert, dass der gewünschte Volumenstrom erreicht wird.

Alle nachfolgend beschriebenen Teile des Volumenstromreglers, mit Ausnahme der Dichtungsringe, bestehen aus Metall, optional aus mit einem DD-Lack beschichtetem Stahlblech.

Durch seine einfachen konstruktiven Merkmale ist der erfindungsgemässe Volumenstromregler insbesondere dadurch von Vorteil, dass im Vergleich zu ähnlichen Volumenstromreglern aus Metall oder Kunststoff deutlich geringe Herstellungskosten aufgewendet werden müssen, ohne dabei die Funktionalität oder die Messgenauigkeit des Volumenstromreglers einzuschränken. Die von dem Volumenstromregler abhängige Messgenauigkeit wird bei dem erfindungsgemässen Volumenstromregler selbst bei vergleichsweise niedrigem Druck bzw. bei niedrigsten Luftgeschwindigkeiten gewährleistet.

Erstaunlich ist die simple und dabei hoch effektive Konstruktion des erfindungsgemässen Volumenstromreglers. Dieser besteht im Wesentlichen aus lediglich vier Bestandteilen, nämlich dem Rohrabschnitt, dem Konfusor, dem Diffusor und der Stellklappe.

Der Rohrabschnitt wird nach gängigem Verfahren aus einem rechteckigen Stahlblech zu einem Rohr umgeformt und verschweisst.

Der Konfusor und der Diffusor werden kostengünstig mit dem sogenannten Metalldrückverfahren aus einem Rohling Alublech hergestellt. Die dazu nötigen Werkzeuge können schnell und einfach angepasst werden, sodass auch unterschiedliche Grössen dieser Teile für unterschiedliche Rohrdurchmesser mit Leichtigkeit hergestellt werden können. Aufwendiges Tiefenziehen, Schmieden oder Sintern entfällt.

Bei der Herstellung von Volumenstromreglern aus Kunststoff müssen hingegen sehr teuer Kunststoffspritz-Maschinen und die dafür nötigen Gussformen aufwendig und teuer angeschafft bzw. hergestellt werden.

Bei der Stellklappe handelt es sich lediglich um ein rund gestanztes und dem jeweiligen Durchmesser des Rohrabschnittes entsprechenden Stahlblechs, welches an eine Achse angefügt wird. Auf die äussere Kante der Stellklappe wird ein Hohlkammerdichtungsring gezogen, so dass bei geschlossener Stellklappenposition Gasdichtigkeit herrscht. Die Achse der Stellklappe ist in einer Achsenlagerung gelagert. Diese Achsenlagerung durchgreift den Rohrkörper und ermöglicht die geräuschlose und leichtgängige Schwenkbarkeit der Stellklappe. An das aus dem Rohrabschnitt herausragende Ende der Achse wird ein Stellantrieb angeschlossen.

Die Montage des erfindungsgemässen Volumenstromreglers ist dann ebenso simpel wie effizient. Konfusor und Diffusor werden über eine Kraftschlussverbindung am Düsenhals zusammengesteckt und in dem Rohrabschnitt platziert. Dabei überlappt der Konfusor den Diffusor und bildet so einen strömungsgünstigen Übergang in Luftrichtung. In einem weiteren Schritt werden von aussen Sicken in den Rohrabschnitt gefügt. Die Sicken sind so angeordnet, dass sie im Inneren des Rohrabschnittes Form-/Kraftschlussverbindungen zwischen einerseits dem Einlass des Konfusors und andererseits dem Auslass des Diffusors bilden. Die über die beiden Sicken entstandenen Form-/Kraftschlussverbindungen gewährleisten eine nachhaltige Zusammenführung der Bauteile bei entsprechender Gasdichtigkeit. Dabei ist der Einsatz von Kleb- oder Dichtungsmitteln oder dergleichen unnötig. Die Einprägung der beiden Sicken und die damit entstehenden Form-/Kraftschlussverbindungen sind ein erstaunlich effizientes Verfahren die beschriebenen Bauteile nachhaltig und vor allem schnell und kostengünstig zu verbinden.

Die erste Sicke am Lufteinlass ist rundherum mit Luftentnahmeöffnungen ausgestattet. Über die Sicke wird eine Ringkammerabdichtung aufgeschoben, welche an einer Stelle von einer Positiv-Druckentnahme-Schlauchtülle durchgriffen wird. Zwischen Sicke und Ringkammerabdichtung befindet sich oberhalb der Luftentnahmeöffnungen ein Hohlraum. Über diesen Hohlraum und die Luftentnahmeöffnungen steht die Positiv-Druckentnahme-Schlauchtülle mit dem Volumenstrom in Inneren des Volumenstromreglers in Verbindung.

Eine Negativ-Druckentnahme-Schlauchtülle ist im Rohrabschnitt auf der Höhe der engsten Stelle des Konfusors am Düsenhals angeordnet. Die Negativ-Druckentnahme-Schlauchtülle durchgreift die Wand des Rohrabschnittes und ist dort mittels einer besonders tragfähigen Flachkopf-Blindnietmutter fixiert. Über umlaufende und siebähnliche angeordnete Luftentnahmeöffnungen im Konfusor wird eine Verbindung zwischen Negativ-Druckentnahme-Schlauchtülle und dem Volumenstrom in Inneren des Konfusors gewährleistet.

An der über die Flachkopf-Blindnietmutter fixierten Negativ-Druckentnahme-Schlauchtülle ist ein Metallstreifen, ähnlich einer rechteckigen Unterlegscheibe mit zwei Bohrungen, befestigt. Dieser Metallstreifen drückt zusammen mit der Ringkammerabdichtung die Positiv-Druckentnahme-Schlauchtülle in die erste Sicke mit den Luftentnahmeöffnungen nieder und dient der Zugentlastung.

Volumenstromregler aus Metall zum Messen und Regeln des Volumenstroms in Klima- und Lüftungsanlagen aus einem Rohrabschnitt mit einem Lufteinlass und einem Luftauslass, wobei der Konfusor und der Diffusor in einem gemeinsamen Düsenhals eine Formschlussverbindung aufweisen, wobei der Konfusor andernseits des Düsenhalses an einer ersten Sicke des Rohrabschnitts eine erste Form-/Kraftschlussverbindung aufweist und der Diffusor andernseits des Düsenhalses an einer zweiten Sicke des Rohrabschnitts eine zweite Form-/Kraftschlussverbindung aufweist.

Diese Art der nachhaltigen Verbindung der einzelnen wesentlichen Bestandteile des Volumenstromreglers ist erstaunlich simpel und effektiv. Hier kann auf Kleb- und Dichtmittel sowie auf zusätzliche Schweissnähte oder Verschraubung bzw. Vernietung verzichtet werden. Zudem dauert der Zusammenbau des Volumenstromreglers durch die innovativ genutzten Sicken und die dadurch entstehenden Form-Kraftschlussverbindungen nur wenige Sekunden.

Ein Ausführungsbeispiel eines Volumenstromreglers ist derart gestaltet, dass der Konfusor eine zweite Luftentnahmeöffnung aufweist, welche mit einer Negativ-Druckentnahme-Schlauchtülle in Wirkverbindung steht. Dadurch, dass die Positiv-Druckentnahme-Schlauchtülle auf der ersten Sicke mittels Metallstreifen, bzw. Zugentlastung und Ringkammerabdichtung aufliegt, entsteht im inneren des Volumenstromreglers kein, den Volumenstrom störendes Hindernis, wie zum Beispiel eine Mutter oder Schraube. Durch die erfindungsgemässe Konstruktion wird der Volumenstrom nicht gestört und die Messungen können fehlerfrei abgenommen werden.

Der Volumenstromregler ist derart ausgeführt, dass bei der ersten Sicke erste Luftentnahmeöffnungen angeordnet sind, die es ermöglichen Positiv-Druckmessungen durchzuführen ohne das die Negativ-Druckentnahme-Schlauchtülle durch den Rohrabschnitt und die Sicke durchgreifen muss und damit den Volumenstrom beeinflusst.

Weiter weist der Volumenstromregler eine Ringkammerabdichtung auf, welche über die erste Sicke aufgezogen ist. Die Ringkammerabdichtung ermöglicht die Positiv-Druckentnahme über den entstehenden Hohlraum mit der ersten Sicke.

Daneben weist die Ringkammerabdichtung eine Positiv-Druckentnahme-Schlauchtülle auf, wobei die Positiv-Druckentnahme-Schlauchtülle die Ringkammerabdichtung durchgreift und mit den ersten Luftentnahmeöffnungen in Wirkverbindung steht. Wirkverbindung bedeutet in diesem Zusammenhang, dass die Positiv-Druckentnahme-Schlauchtülle die Luft entnehmen kann, welche durch die ersten Luftentnahmeöffnungen unter die Ringkammerabdichtung geleitet wurden.

Weiter ist an der Negativ-Druckentnahme-Schlauchtülle ein Metallstreifen angeordnet, welcher einerseits an der Negativ-Druckentnahme-Schlauchtülle mittels einer Flachkopf-Blindnietmutter an den Rohrabschnitt hingeschraubt ist und andererseits die Ringkammerabdichtung und die Positiv- Druckentnahme-Schlauchtülle in die erste Sicke drückt. Dies hat den Vorteil, dass der Metallstreifen die ansonsten durch die Luft aus den ersten Luftentnahmeöffnungen tretende Luft beanspruchte Ringkammerabdichtung in der ersten Sicke positioniert hält und gleichzeitig der Zugentlastung dient.

Ausserdem ist zwischen der Venturidüse und dem Luftauslass eine Stellklappe angeordnet, die über einen Stellantrieb bewegt wird. Ja nach ermitteltem Volumenstrom wird dann die Stellkappe justiert. Die Stellklappe ist hierbei schräg zu dem Luftauslass angeordnet im geschlossenen Zustand. Das hat einen aerodynamischen, schalltechnischen und regelungstechnischen Vorteil. Die elliptische Stellklappe ermöglicht es, dass sich weniger Turbulenzen bilden beim Öffnen der Klappe. Dies hat auch zur Folge, dass sich weniger Schall ausbildet. Der kürzere Verfahrweg der Klappe erlaubt ausserdem eine kürzere Regelzeit.

Die Stellklappe ist an einer Achse schwenkbar angeordnet und weist eine Achsenlagerung auf. Diese ermöglicht eine leichtgängige und geräuschlose Beweglichkeit.

Weiter umfasst die Stellklappe einen Hohlkammerdichtungsring, der bei geschlossener Position der Stellklappe einen gasdichten Abschluss mit dem Rohrabschnitt gewährleistet.

Weiter wird zwischen der Venturidüse und dem Luftauslass eine Stellklappe angeordnet. Sie ist schräg angeordnet und hat eine elliptische Form. Das bedeutet, dass Sie nicht im Wesentlichen parallel zu dem Luftausgang angeordnet ist, sondern relativ zu dem Luftausgang gekippt ist. Auf diese Weise reichen leichte Kippbewegungen der Stellklappe um relativ hohe Luftdurchflussmengen zu ermöglichen.

### Figurenbeschreibung

Folgend wird eine bevorzugte Ausführungsform der Erfindung anhand angeführter Zeichnungen erläutert:
- Figur 1: zeigt einen schematischen Längsschnitt eines erfindungsgemässen Volumenstromreglers,
- Figur 2: zeigt eine vergrösserte Teilansicht einer ersten Sicke aus Figur 1 mit einer Positiv-Druckentnahme-Schlauchtülle und einer ersten Form-/Kraftschlussverbindung,
- Figur 3: zeigt eine vergrösserte Teilansicht einer zweiten Sicke aus Figur 1 und einer zweiten Form-/Kraftschlussverbindung,
- Figur 4: zeigt eine vergrösserte Teilansicht einer Kraftschlussverbindung aus Figur 1 zwischen Konfusor und Diffusor,
- Figur 5: zeigt eine schematische Seitenansicht eines erfindungsgemässen Volumenstromreglers,
- Figur 6: zeigt eine schematische Draufsicht schräg von oben auf einen erfindungsgemässen Volumenstromregler.

### Figur 1:

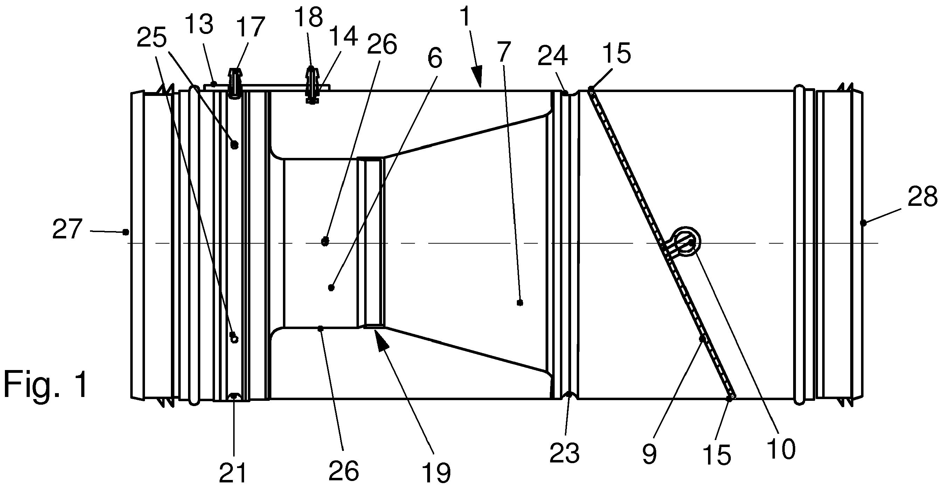

Figur 1 zeigt einen schematischen Längsschnitt eines erfindungsgemässen Volumenstromreglers. In einem Rohrabschnitt 1 sind zwischen einem Lufteinlass 27 und einem Luftauslass 28 ein Konfusor 6, ein Diffusor 7 und eine Stellklappe 9 angeordnet.

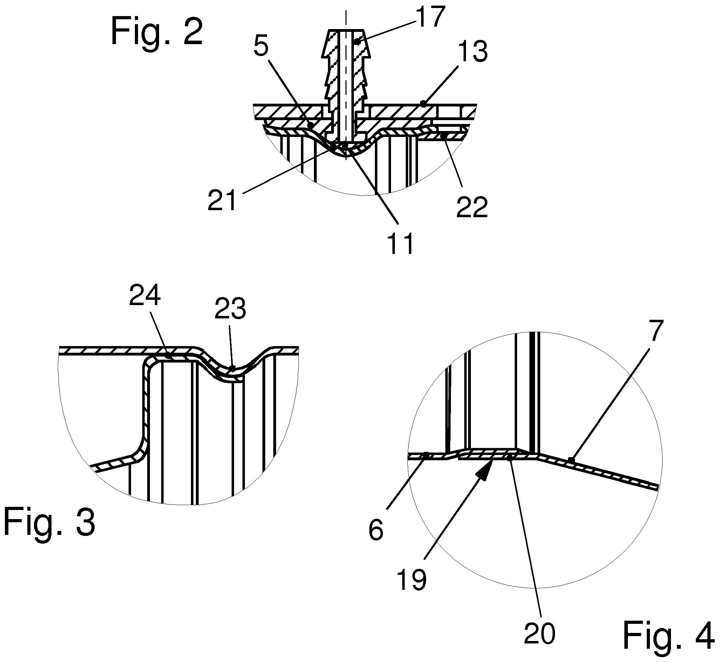

Der Konfusor 6 und der Diffusor 7 sind an einem Düsenhals 19 über eine Kraftschlussverbindung 20 gasdicht und ohne Kleb- oder Dichtstoffe ineinander gesteckt. In Figur 4 wird diese Kraftschlussverbindung 20 noch einmal in einem vergrösserten Ausschnitt dargestellt.

Auf der Seite des Lufteinlasses 27 bildet ein Einlass des Konfusors 6 mit einer ersten Sicke 21 eine erste Form-/Kraftschlussverbindung 22. Auf der Seite des Luftauslasses 28 bildet ein Auslass des Diffusors 7 mit einer zweiten Sicke 23 eine zweite Form-/Kraftschlussverbindung 24. Wesentlich an diesen beiden Form-/Kraftschlussverbindungen 22, 24 ist zum einen, dass keine störenden Kanten entstehen die den Luftstrom stören könnten und zum anderen, dass keine Dicht- oder Klebstoffe zur Abdichtung an den Form-/Kraftschlussverbindungen 22 und 24 verwendet werden müssen. Beide Form-/Kraftschlussverbindungen 22, 24 sind noch einmal in einem vergrösserten Ausschnitt in Figur 2 und 3 abgebildet.

Zwischen dem Diffusor 7 und dem Luftauslass 28 ist eine an einer Achse 10 befestigte Stellklappe 9 angeordnet. Diese Stellklappe 9 ist schwenkbar und umfasst einen Hohlkammerdichtungsring 15, welcher bei geschlossener Position der Stellklappe 9 Gasdichtigkeit gewährleistet. Die Stellklappe 9 ist schräg zu dem Luftauslass 28 angeordnet. Die Achse 10 ist über eine Achsenlagerung 16 gedämpft gelagert. An dem aus dem Rohrabschnitt 1 herausragenden Ende der Achse 10 wird ein nicht dargestellter Stellantrieb angeschlossen, um die Stellklappe 9 in die gewünschte Position zu bewegen. Für die Positiv-Druckmessung zwischen dem Lufteinlass 27 und dem Konfusor 6 sind in der ersten Sicke 21 rundherum erste Luftentnahmeöffnungen 25 angeordnet.

Eine Ringkammerabdichtung 5 bildet mit der ersten Sicke 21 einen Hohlraum 11; besser zu erkennen in Figur 2. Über diesen Hohlraum 11 steht eine Positiv-Druckentnahme-Schlauchtülle 17, die die Ringkammerabdichtung 5 durchgreift, in Wirkverbindung mit den ersten Luftentnahmeöffnungen 25. Die Positiv-Druckentnehme-Schlauchtülle 17 wird durch die Ringkammerabdichtung 5 und einen Metallstreifen (Zugentlastung) 13 gehalten.

Der Metallstreifen 13 ist an einer Negativ-Druckentnehme-Schlauchtülle 18 befestigt, die ihrerseits durch eine Flachkopf-Bildnietmutter 14 in dem Rohrabschnitt 1 zugsicher verankert ist.

Für die Negativ-Druckentnahme steht die Negativ-Druckentnehme-Schlauchtülle 18 über die zweiten Luftentnahmeöffnungen 26 mit dem Luftdruck im inneren der Venturidüse 6 in Verbindung.

### Figur 2

Figur 2 zeigt einen vergrösserten Ausschnitt der ersten Sicke 21 mit der Positiv-Druckentnehme-Schlauchtülle 17. Die Positiv-Druckentnehme-Schlauchtülle 17 wird von einem Metallstreifen 13 und der Ringkammerabdichtung 5 in die erste Sicke 21 gedrückt. Zwischen der Ringkammerabdichtung 5 und der ersten Sicke 21, in der sich die ersten Luftentnahmeöffnungen 25 befinden, entsteht der Hohlraum 11. Über diesen Hohlraum 11 und die ersten Luftentnahmeöffnungen 25 wird eine Verbindung zwischen Rohrinneren und der Positiv-Druckentnehme-Schlauchtülle 17 hergestellt.

Die erste Form-/Kraftschlussverbindung 22 zwischen dem Rohrabschnitt 1 und dem Einlass des Konfusors 6, entsteht durch die erste Sicke 21. Es entstehen hierbei keine störenden Kanten die den Luftstrom beeinflussen könnten. Die erste Form-/Kraftschlussverbindung 22 ist gasdicht, Kleb- und Dichtungsmittel sind daher überflüssig.

### Figur 3

In Figur 3 ist ein vergrösserter Ausschnitt der zweiten Sicken 23 zu sehen. Über die zweite Sicke 23 wird die zweite Form-/Kraftschlussverbindung 24 zwischen dem Auslass des Diffusors 7 und dem Rohrabschnitt 1 hergestellt. Dabei wurden wiederum alle Kanten oder Ausbuchtungen so überlappend platziert, dass sie den Volumenstrom nicht beeinflussen. Auch hier kann aufgrund der besonderen Konstruktion auf Kleb- und Dichtungsmittel verzichtet werden.

### Figur 4

Figur 4 zeigt einen vergrösserten Ausschnitt des Düsenhalses 19 an der Kraftschlussverbindung 20 zwischen Konfusor 6 und Diffusor 7. Auch hier entstehen keine den Volumenstrom beeinflussende Kanten oder Ausbuchtungen und es kann ebenfalls auf Kleb- und Dichtungsmittel verzichtet werden.

### Figur 5

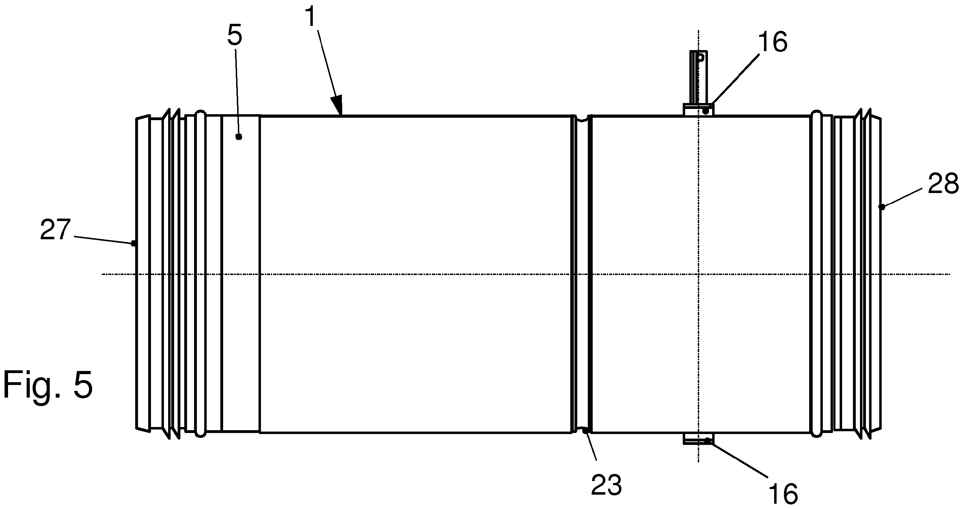

In Figur 5 ist eine schematische Seitenansicht eines erfindungsgemässen Volumenstromreglers zu sehen, die im Vergleich zur Figur 1 um 90 Grad im Uhrzeigersinn gedreht wurde. Dadurch zeigt die Achse 10 nach oben. An die Achse 10 wird ein nicht dargestelltes Steuergerät angeschlossen.

Die Ringkammerabdichtung 5 liegt auf der ersten Sicke 21. Die Druckentnahme-Schlauchtüllen 17 und 18 sind abbildungsbedingt nicht zu sehen, da sie sich auf der nicht abgebildeten Seite des Rohrabschnitts 1 befinden. Die über die Achse 10 schwenkbare Stellklappe 9 im Inneren des Volumenstromreglers wird über die Achsenlagerung 16 gedämpft gelagert.

### Figur 6

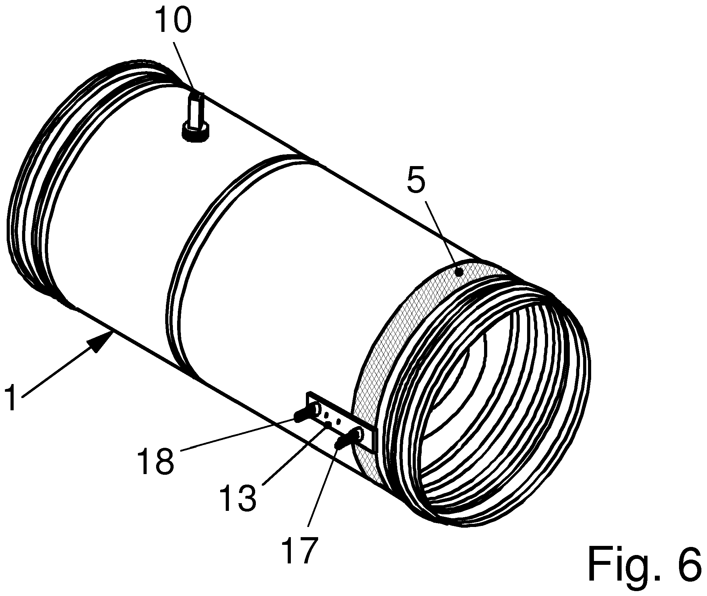

Figur 6 zeigt eine schematische Draufsicht schräg von oben auf einen erfindungsgemässen Volumenstromregler. Aus dieser Perspektive sind sowohl die beiden Druckentnahme-Schlauchtüllen 17 und 18 und der Metallstreifen 13, als auch die Achse 10 der innenliegenden Stellklappe 9 zu sehen.

Der Volumenstromregler besteht mit allen wesentlichen Teilen aus Metall und ist optional durch eine DD-Lackierung gegen Korrosion und ggf. anhaftende Partikel geschützt. Die Abmessungen der Rohrdurchmesser liegen zwischen 80 mm und 400 mm, vorzugsweise zwischen 100 mm und 315 mm.

**Bezugszeichenliste**

| | | | | | |
|---|---|---|---|---|---|
| 1 | Rohrabschnitt | 34 | | 67 | |
| 2 | | 35 | | 68 | |
| 3 | | 36 | | 69 | |
| 4 | | 37 | | 70 | |
| 5 | Ringkammerabdichtung | 38 | | 71 | |
| 6 | Konfusor | 39 | | 72 | |
| 7 | Diffusor | 40 | | 73 | |
| 8 | | 41 | | 74 | |
| 9 | Stellklappe | 42 | | 75 | |
| 10 | Achse | 43 | | 76 | |
| 11 | Hohlraum | 44 | | 77 | |
| 12 | | 45 | | 78 | |
| 13 | Metallstreifen | 46 | | 79 | |
| 14 | Flachkopf-Blindnietmutter | 47 | | | |
| 15 | Hohlkammerdichtungsring | 48 | | | |
| 16 | Achsenlagerung | 49 | | | |
| 17 | Positiv-Druckentnahme-Schlauchtülle | 50 | | | |
| 18 | Negativ-Druckentnahme-Schlauchtülle | 51 | | | |
| 19 | Düsenhals | 52 | | | |
| 20 | Formschlussverbindung | 53 | | | |
| 21 | Erste Sicke | 54 | | | |
| 22 | Erste Form-/Kraftschlussverbindung | 55 | | | |
| 23 | Zweite Sicke | 56 | | | |
| 24 | Zweite Form-/Kraftschlussverbindung | 57 | | | |
| 25 | Erste Luftentnahmeöffnungen | 58 | | | |
| 26 | Zweite Luftentnahmeöffnungen | 59 | | | |
| 27 | Lufteinlass | 60 | | | |
| 28 | Luftauslass | 61 | | | |
| 29 | | 62 | | | |
| 30 | | 63 | | | |
| 31 | | 64 | | | |
| 32 | | 65 | | | |
| 33 | | 66 | | | |
| 1 | Rohrabschnitt | 34 | | 67 | |
| 2 | | 35 | | 68 | |
| 3 | | 36 | | 69 | |
| 4 | | 37 | | 70 | |
| 5 | Ringkammerabdichtung | 38 | | 71 | |
| 6 | Konfusor | 39 | | 72 | |
| 7 | Diffusor | 40 | | 73 | |
| 8 | | 41 | | 74 | |
| 9 | Stellklappe | 42 | | 75 | |
| 10 | Achse | 43 | | 76 | |
| 11 | Hohlraum | 44 | | 77 | |
| 12 | | 45 | | 78 | |
| 13 | Metallstreifen | 46 | | 79 | |
| 14 | Flachkopf-Blindnietmutter | 47 | | | |
| 15 | Hohlkammerdichtungsring | 48 | | | |
| 16 | Achsenlagerung | 49 | | | |
| 17 | Positiv-Druckentnahme-Schlauchtülle | 50 | | | |
| 18 | Negativ-Druckentnahme-Schlauchtülle | 51 | | | |
| 19 | Düsenhals | 52 | | | |
| 20 | Formschlussverbindung | 53 | | | |
| 21 | Erste Sicke | 54 | | | |
| 22 | Erste Form-/Kraftschlussverbindung | 55 | | | |
| 23 | Zweite Sicke | 56 | | | |
| 24 | Zweite Form-/Kraftschlussverbindung | 57 | | | |
| 25 | Erste Luftentnahmeöffnungen | 58 | | | |
| 26 | Zweite Luftentnahmeöffnungen | 59 | | | |
| 27 | Lufteinlass | 60 | | | |
| 28 | Luftauslass | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Volumenstromregler zum Messen und Regeln des Volumenstroms in Klima- und Lüftungsanlagen aus einem Rohrabschnitt (1) mit einem Lufteinlass (27) und einem Luftauslass (28), wobei in dem Rohrabschnitt (1) ein Konfusor (6) und ein Diffusor (7) angeordnet sind, wobei der Konfusor (6) und der Diffusor (7) in einem gemeinsamen Düsenhals (19) eine Kraftschlussverbindung (20) aufweisen, wobei der Konfusor (6) andernseits des Düsenhalses (19) an einer ersten Sicke (21) des Rohrabschnitts (1) eine erste Form-/Kraftschlussverbindung (22) aufweist und der Diffusor (7) andernseits des Düsenhalses (19) an einer zweiten Sicke (23) des Rohrabschnitts (1) eine zweite Form-/Kraftschlussverbindung (24)
wobei zwischen dem Konfusor (7) und dem Luftauslass (28) eine Stellklappe (9) angeordnet ist,
**dadurch gekennzeichnet, dass**
der Volumenstromregler aus Metall ist, der Konfusor (6) und der Diffusor (7) im Metalldrückverfahren aus je einer Metallronde gedreht sind, wobei der Konfusor (6) und der Diffusor (7) an dem Düsenhals (19) kraftschlüssig ineinander gesteckt sind, sodass eine Kraftschlussverbindung (20) entsteht, wobei der Konfusor (6) zweite Luftentnahmeöffnungen (26) aufweist, wobei der Konfusor (6) und der Diffusor (7) in zusammengesteckter Lage in den Rohrabschnitt (1) geschoben sind und die erste Sicke (21) in den Rohrabschnitt (1) geformt ist, sodass eine erste Form-/Kraftschlussverbindung (22) entsteht, wobei die erste Sicke (21) erste Luftentnahmeöffnungen (25) aufweist und die zweite Sicke (23) in den Rohrabschnitt (1) geformt ist, sodass die zweite Form-/Kraftschlussverbindung (24) entsteht, wobei über die erste Sicke (21) eine Ringkammerabdichtung (5) aufgezogen ist, wobei die Ringkammerabdichtung (5) mit einer Positiv-Druckentnahme-Schlauchtülle (17) verbunden ist, wobei eine Negativ-Druckentnahme-Schlauchtülle (18) mit dem Rohrabschnitt (1) mittels Flachkopf-Blindnietmutter (14) verbunden ist, wobei an der Negativ-Druckentnahme-Schlauchtülle (18) ein Metallstreifen (13) einends an den Rohrabschnitt (1) geschraubt ist, sodass der Metallstreifen (13) andernends die Ringkammerabdichtung (5) in die erste Sicke (21) drückt.

2. Volumenstromregler nach Anspruch 1, **dadurch gekennzeichnet, dass** die Positiv-Druckentnahme-Schlauchtülle (17) die Ringkammerabdichtung (5) durchgreift und mit den ersten Luftentnahmeöffnungen (25) in Wirkverbindung steht.

3. Volumenstromregler nach einem der vorigen Ansprüche, **dadurch gekennzeichnet, dass** die Stellklappe (9) an einer Achse (10) schwenkbar angeordnet ist.

4. Volumenstromregler nach Anspruch 3, **dadurch gekennzeichnet, dass** die Achse (10) eine Achsenlagerung (16) aufweist.

5. Volumenstromregler nach einem der vorigen Ansprüche, **dadurch gekennzeichnet, dass** die Stellklappe (9) einen Hohlkammerdichtungsring (15) umfasst.

## Claims

1. Volume flow controller for measuring and controlling the volume flow in air-conditioning and ventilation systems, comprising a pipe section (1) with an air inlet (27) and an air outlet (28), a confuser (6) and a diffuser (7) being arranged in the pipe section (1), the confuser (6) and the diffuser (7) having a frictional connection (20) in a common nozzle neck (19), wherein the confuser (6) on the other side of the nozzle neck (19) at a first bead (21) of the tube section (1) has a first positive/force connection (22) and the diffuser (7) on the other side of the nozzle neck (19) at a second bead (23) of the tube section (1) has a second positive/force connection (24), wherein an adjusting flap (9) is arranged between the confuser (7) and the air outlet (28),
**characterised in that**
the volume flow controller is made of metal and the confuser (6) and the diffuser (7) are each rotated in the metal pressing process from a metal blank, the confuser (6) and the diffuser (7) being non-positively inserted into one another at the nozzle neck (19) so that a non-positive connection (20) is formed, the confuser (6) having second air extraction openings (26), the confusor (6) and the diffusor (7) being pushed into the tube section (1) in the assembled position and the first bead (21) being formed into the tube section (1) so that a first positive/force connection (22) is formed, the first bead (21) having first air extraction openings (25) and the second bead (23) being formed into the tube section (1), so that the second positive/non-positive connection (24) is formed, an annular chamber seal (5) being fitted over the first bead (21), the annular chamber seal (5) being connected to a positive pressure tapping hose nozzle (17), a negative pressure tapping hose nozzle (18) being connected to the pipe section (1) by means of a flat-head blind rivet nut (14), a metal strip (13) being screwed at one end to the pipe section (1) on the negative pressure tapping hose nozzle (18), so that the metal strip (13) presses the annular chamber seal (5) into the first bead (21) at the other end.

2. Volume flow controller according to claim 1, **characterized in that** the positive pressure extraction hose nozzle (17) passes through the annular chamber seal (5) and is operatively connected to the first air extraction openings (25).

3. Volume flow controller according to one of the previous claims, **characterized in that** the control damper (9) is arranged pivotably on an axis (10).

4. Volume flow controller according to claim 3, **characterized in that** the axle (10) has an axle bearing (16).

5. Volume flow controller according to one of the previous claims, **characterized in that** the control damper (9) comprises a hollow chamber sealing ring (15).

## Revendications

1. Régulateur de débit pour mesurer et réguler le débit dans les installations de climatisation et de ventilation composé d'un segment de tuyau (1) avec une entrée d'air (27) et une sortie d'air (28), dans lequel sont disposés, dans le segment de tuyau (1), un confuseur (6) et un diffuseur (7), dans lequel le confuseur (6) et le diffuseur (7) présentent, dans un col de tuyère commun (19), une connexion en liaison de force (20), dans lequel le confiseur (6) de l'autre côté du col de tuyère (19) présente, sur une première nervure (21) du segment de tuyau (1), une première connexion en liaison de forme/de force (22) et le diffuseur (7) présente, de l'autre côté du col de tuyère (19), sur une deuxième nervure (23) du segment de tuyau (1), une deuxième connexion en liaison de forme/de force (24), dans lequel est disposé, entre le confuseur (7) et la sortie d'air (28), un clapet de réglage (9),
**caractérisé par le fait que**
le régulateur de débit est réalisé en métal, le confuseur (6) et le diffuseur (7) sont réalisés, chacun, par tournage en un disque en métal selon le procédé de repoussage de métal, le confuseur (6) et le diffuseur (7) étant introduits par force l'un dans l'autre au col de tuyère (19), de sorte qu'il se produise une connexion en liaison de force (20), le confuseur (6) présentant des deuxièmes ouvertures de prélèvement d'air (26), le confuseur (6) et le diffuseur (7) étant introduits, en position assemblée, dans le segment de tuyau (1) et la première nervure (21) étant formée dans le segment de tuyau (1) de sorte qu'il se produise une première connexion en liaison de forme/de force (22), la première nervure (21) présentant des premières ouvertures de prélèvement d'air (25) et la deuxième nervure (23) étant formée dans le segment de tuyau (1), de sorte qu'il se produise une deuxième connexion en liaison de forme/de force (24), sur la première nervure (21) étant enfilé un joint d'étanchéité à chambre annulaire (5), le joint d'étanchéité à chambre annulaire (5) étant connecté à un embout de tuyau de prélèvement de pression positive (17), un embout de tuyau de prélèvement de pression négative (18) étant connecté au segment de tuyau (1) au moyen d'un écrou borgne à riveter à tête plate (14), sur l'embout de tuyau de prélèvement de pression négative (18) étant vissée, à une extrémité, une bande métallique (13) au segment de tuyau (1), de sorte que la bande métallique (13) pousse, à l'autre extrémité, le joint d'étanchéité à chambre annulaire (5) dans la première nervure (21).

2. Régulateur de débit selon la revendication 1, **caractérisé par le fait que** l'embout de tuyau de prélèvement de pression positive (17) traverse le joint d'étanchéité à chambre annulaire (5) et est en liaison active avec les premières ouvertures de prélèvement d'air (25).

3. Régulateur de débit selon l'une des revendications précédentes, **caractérisé par le fait que** le clapet de réglage (9) est disposé de manière pivotante sur un axe (10).

4. Régulateur de débit selon la revendication 3, **caractérisé par le fait que** l'axe (10) présente un palier d'axe (16).

5. Régulateur de débit selon l'une des revendications précédentes, **caractérisé par le fait que** le clapet de réglage (9) comporte une bague d'étanchéité à chambre creuse (15).
